# EUROPÄISCHE PATENTSCHRIFT

(11) **EP 1 288 602 B1**
(45) Veröffentlichungstag und Bekanntmachung des Hinweises auf die Patenterteilung: **26.07.2006**
(21) Anmeldenummer: 02450186.8
(22) Anmeldetag: 28.08.2002
(51) Int. Cl.: F28D 1/03

(54) **Paneel für Plattenheiz(kühl)körper und Verfahren zur Herstellung des Paneels**
Panel for plate radiator / cooler and process for making same
Panneau pour radiateur / refroidisseur à plaques et son procédé de fabrication

(30) Priorität: 30.08.2001 AT 13792001
(43) Veröffentlichungstag der Anmeldung: 05.03.2003
(73) Patentinhaber: Vogel & Noot Wärmetechnik Aktiengesellschaft, 8661 Wartberg (AT)
(72) Erfinder: Schrittwieser, Hans-Peter, 8670 Krieglach (AT)
(74) Vertreter: Wildhack, Helmut

(56) Entgegenhaltungen:
- DE-A- 2 126 578
- DE-A- 19 653 440
- DE-A- 19 948 776
- FR-A- 1 600 802
- FR-A- 2 489 496

## Beschreibung

Die Erfindung betrifft ein Verfahren zur Herstellung eines Paneels gemäß dem Oberbegriff des Patentanspruches 1.

Aus der FR-A-1,600,802 ist eine Heizkörperpaneel mit mäanderförmigen Fluidführungen bekannt. Bei der Herstellung der mäanderförmigen Fluidführungen wird derart vorgegangen, dass in einer Blechplatte abwechselnde von den einander gegenüberliegenden Rändern ausgehende Sickungen vorgenommen werden, die jeweils vor dem anderen Rand enden und dort einen Fluiddurchgang freilassen. Derartige Platten können zusammengeschweißt werden und bilden sodann Heizkörperpaneele mit mäanderförmig verlaufenden Fluiddurchgang.

Paneele mit, insbesondere entlang der beiden Längsseiten verlaufenden, Fluidsammelkanälen und dazwischenliegenden Querkanälen gehören zum Stand der Technik. Der konstruktive Aufbau eines derartigen Paneels, insbesondere für Plattenheiz(kühl)körper mit einem oberen Sammelkanal und einem unteren Sammelkanal und dazwischenliegenden Querkanälen, welche diese Sammelkanäle verbinden, stellt eine hydraulisch und wärmetechnisch günstige Lösung dar, sofeme dieser Plattenheizkörper in Normallage, das heißt mit einem Paneel, betrieben wird, das vertikal ausgerichtet ist. Die Wasserbeaufschlagung erfolgt in diesem Fall symmetrisch bzw. wird das Paneel vorteilhafter Weise im oberen Bereich an den Fluidvorlauf und im unteren Bereich an den Fluidrücklauf angeschlossen.

Wird ein derartiges Paneel jedoch in einer anderen Lage verwendet, z.B. in einer Lage aufgestellt, in der die Sammelkanäle vertikal verlaufen, das heißt gegenüber der oben beschriebenen Stellung um 90° gedreht, oder wird das Paneel horizontal liegend betrieben, derart, dass die beiden Sammelkanäle und die Querkanäle in einer horizontalen Ebene liegen, dann ist die Wasseraufteilung nicht mehr homogen, und der Wirkungsgrad verringert sich beträchtlich.

Der Fertigungsprozess eines derartigen Paneels läuft mehrstufig ab, derart, dass in zwei üblicherweise gleichzeitig von Bandblechspulen, insbesondere in Paneellängsrichtung, abgewickelten Biechplatten die Sammelkanäle und Querkanäle mit einem Prägewerkzeug eingepresst werden. Während eines Pressenhubes können ein, zwei, drei oder auch mehr Querkanäle mit den entsprechenden Sammelkanalabschnitten ausgeprägt werden. Die Sammelkanalabschnitte werden durch die Enden der Sickungen, die Form der Querkanäle und entsprechende äußere Längs-Randprägungen erstellt bzw. ausgeformt.

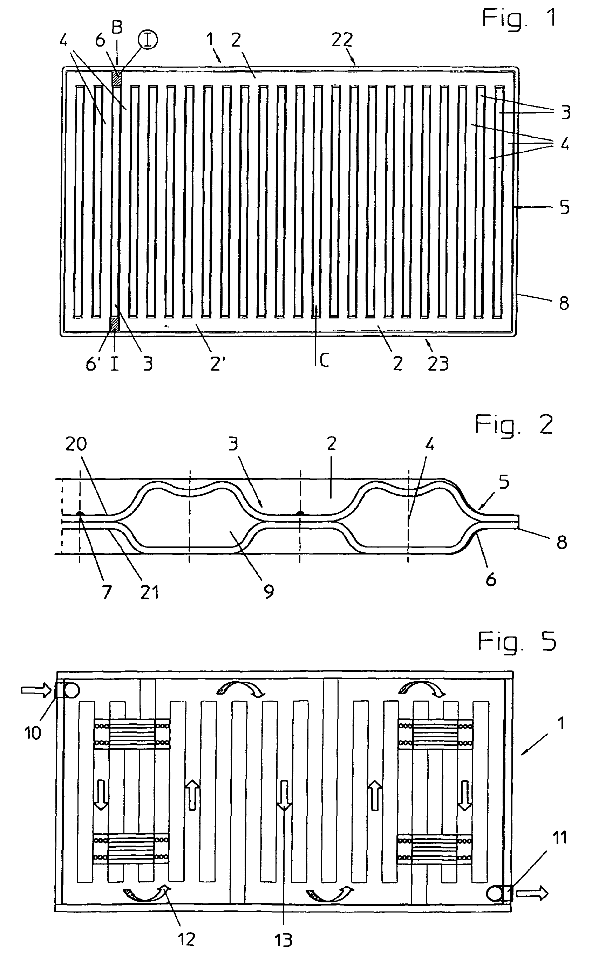

Um nun am Ende des Paneels die Sammelkanäle zu verschließen und die Querschweißnaht setzen zu können, werden mit sogenannten Keilschiebern, die in das Paneelwerkzeug integriert sind, die Sammelkanäle rückgeprägt, und danach werden die Quernaht und auch die Längsnaht geschweißt. Dieser Vorgang geschieht immer am Anfang und am Ende einer jeden Paneelplatte, und zwar in der Form, dass der Bereich der beiden parallelen Sammelkanäle 2, 2', der in Figur 1 mit I bezeichnet ist, durch den Keilschieber nach unten gedrückt wird. Damit wird die von dem Paneelwerkzeug ausgebildete Sickung 3 in ihren beiden Endbereichen mit Rückprägung 6, 6' verlängert. In der Mitte der Sickung 3 und in der Mitte der beiden Einsickungen 6, 6' erfolgt dann das Trennen der Blechplatten bzw. Blechbahnen mit einem entsprechenden Trennwerkzeug.

Es ist Aufgabe der Erfindung ein einfaches Verfahren zur Herstellung eines Paneels zu schaffen, wobei das Paneel in beliebiger Lage, insbesondere auch in horizontal ausgerichteter Lage, einen günstigen Wirkungsgrad ergibt.

Dieses Ziel wird mit den im Kennzeichen des Patentanspruches 1 angeführten Merkmalen erreicht.

Die Funktion des herkömmlichen Paneelwerkzeuges, das im Wesentlichen ein Pressstempel ist, der mit zwei Keilschiebern versehen ist, wird erfindungsgemäß abgeändert; insbesondere wird die Funktion bzw. die Tätigkeit der Keilschieber verändert. Erfindungsgemäß ist vorgesehen, dass die Keilschieber unabhängig voneinander von der Ruheposition in die Arbeitsposition verstellbar sind. Damit kann wahlweise auf einer oder gleichzeitig auf der anderen oder auf beiden Seiten des herzustellenden Paneels eine entsprechende Einsickung ausgebildet werden. Erfindungsgemäß wird nicht nur am Anfang und am Ende eines jeden Paneels eine Rückprägung der dort liegenden Sammelkanäle vorgenommen, sondern über die Baulänge des Paneels werden zyklisch einmal links und einmal rechts, versetzt gegeneinander Rückprägungen der Sammelkanäle vorgenommen. Auf diese Weise erhält man eine mäanderförmige, zwangsgeführte Fluidströmung. Man kann diese Rückprägung je nach gewünschter Strömungsvorgabe versetzt nach einem, zwei, drei oder auch mehr, z.B. sechs, Querkanälen ausbilden.

Bei der üblichen Herstellung von Heizkörperpaneelen prägen die Keilschieber an den Paneelenden zu beiden Seiten des Paneels gleichzeitig die Sammelkanäle zurück. Diese Vorgangsweise gilt auch für die Herstellung des erfindungsgemäßen Paneels. Erfindungsgemäß kann jedoch einmal der Keilschieber auf der einen und dann auf der anderen Seite aktiviert bzw. in Arbeitsstellung verstellt werden, und führt seine gleiche Prägewirkung wie im Endbereich der Paneele aus, jedoch erfolgt dann eine Sammelkanalrückprägung nur in einem der beiden Randbereiche. Die Keilschieber können mittels einer entsprechenden Programmsteuerung elektrisch, pneumatisch oder hydraulisch betätigt werden.

Die abwechselnd und gegeneinander versetzt in den beiden Sammelkanälen vorgenommenen Einsickungen bewirken eine zwangsgeführte Fluidströmung durch den gesamten Heizkörper, womit insbesondere bei Solarkollektoren eine verbesserte Wärmeaufnahme und bei Heizkörpern unter Umständen eine verbesserte Wärmeabgabe erreicht wird.

Aus optischen Gründen weisen die Einsickungen die selbe Querschnittsform auf, wie die für die Herstellung der Querkanäle vorgenommenen Sickungen.

Wenn man die zwangsgeführte Fluidströmung noch verbessern will, kann vorgesehen sein, dass die parallelen Platten durch Punktschweißen im Bereich der Sickungen, in welchen diese beiden Platten aufeinanderliegen, miteinander verbunden werden. Damit wird auch die Stabilität des hergestellten Heizkörpers vergrößert. Eine Erhöhung dieser Stabilität wird auch mit Versteifungen erreicht, da im Bereich der Einsickungen die durch einen durchgehenden Sammelkanal gegebene Versteifung des Paneels wegfällt.

Die Paneelkonzeption ist vorteilhaft für die Einsatzgebiete, bei welchen das Paneel vorwiegend in horizontaler Lage zum Einsatz kommt, wie z.B. Deckenstrahlungsheizpaneele, die parallel zu einer Decke montiert werden oder auch für vertikal angeordnete Heizkörper, die parallel zu Wänden montiert werden, wobei die Sammelkanäle vertikal verlaufen. Vorteilhaft ist diese Paneelkonzeption auch für Wärmeüberträger bzw. Wärmetauscher, die eine fast horizontale Montage verlangen, z.B. Paneele zur Trocknung von Gütern, die teilweise mit dem Paneel in Berührung stehen oder auf dem Paneel aufliegen bzw. sich über dieses hinwegbewegen. Besonders vorteilhaft ist diese Zwangsführung des Fluids für Solarheizungsanlagen.

Das Setzen von Schweißpunkten für die Einsickungen im Sammelkanalbereich erfolgt üblicherweise nicht durch Mehrreihenvielpunkt-Schweißmaschinen, sondern durch eine in einer Paneelfertigungslinie einer Paneelpresse nachfolgende Heftschweißpunkt-Maschine, die üblicherweise nur Heftpunkte setzt, wie sie für das Zusammenhalten von zwei Paneelhalbschalen eingesetzt werden. Eine durchgehende Verschweißung der einander gegenüberliegenden Sickungen ist nicht erforderlich.

Vorteilhafte Ausführungsformen ergeben sich aus der folgenden Beschreibung, den Patentansprüchen und den Zeichnungen.

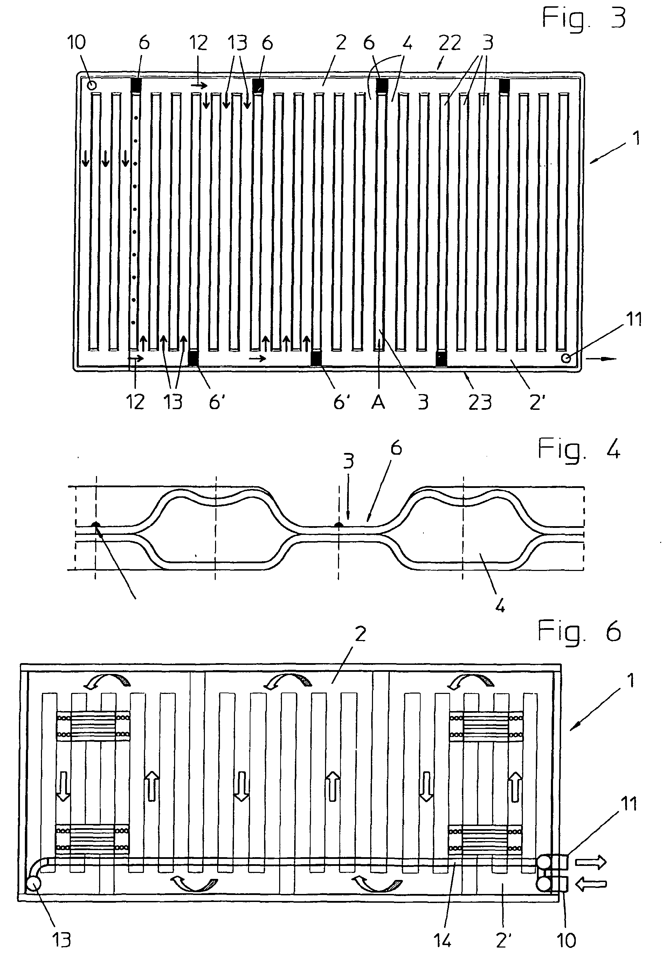

Es zeigen Fig. 1 eine schematische Ansicht eines Paneels gemäß dem Stand der Technik, Fig. 2 einen Detailschnitt durch ein Paneel gemäß Fig. 1. Fig. 3 zeigt ein erfindungsgemäß geprägtes Paneel, und Fig. 4 zeigt ein Detail gemäß Pfeil A in Fig. 3. Fig. 5 und 6 zeigen schematisch erfindungsgemäß ausgebildete Paneele.

Fig. 1 und 2 zeigen ein Paneel 1, das an seinen beiden Längsrandseiten mit Fluidführungskanälen 2, 2' ausgebildet ist. Zwischen diesen Fluidführungskanälen 2, 2' verlaufen Querkanäle 4, die durch Einsickungen 3 voneinander getrennt sind. Am Umfang der beiden das Paneel ausbildenden Platten 20, 21 ist eine Schweißnaht 8 ausgebildet. Die Sicken 3 können mittels Schweißpunkten 7 miteinander verbunden werden, um einem unerwünschten Fluiddurchtritt besser Widerstand zu leisten. Im Endbereich eines Paneels 1 erfolgt im Bereich einer Sickung 3 mit den Keilschiebern des Prägewerkzeuges auch eine Rückprägung bzw. ein Einsicken der Fluidführungskanäle 2, 2', und zwar in den beiden Endbereichen einer Sickung 3, die durch entsprechende Einsickungen 6, 6' verlängert werden. In der Mitte der Sickung 3 erfolgt - angedeutet durch Pfeil B - ein Abtrennen und die Ausbildung der umlaufenden Schweißnaht 8, womit das Paneel 1 abgetrennt und im Wesentlichen fertiggestellt ist.

Fig. 2 zeigt die ausgebildeten Sickungen 3 sowie die Querkanäle 4 in einer Schnittansicht entsprechend Pfeil C. Rechts in Fig. 2 ist die Rückprägung 5 zu erkennen, die durch die Einsickungen 6, 6' im Randbereich des Paneels 1 erhalten wird.

Fig. 3 zeigt ein erfindungsgemäß ausgebildetes Paneel 1, bei dem bereits eine Abtrennung von dem endlosen Blechband bzw. den Platten 20, 21 erfolgt ist. Im Zuge des Prägens der beiden das Paneel 1 ausbildenden Platten 20, 21 wurden in den seitlichen Randbereichen 22, 23, in denen die Fluidführungskanäle 2, 2' verlaufen, zusätzliche Einsickungen 6, 6' ausgebildet. Diese Einsickungen 6, 6' sind zueinander versetzt in den Fluidführungskanälen 2, 2' ausgebildet und verlängern jeweils den Endbereich einer Sickung 3. Im linken oberen Eckbereich ist ein Fluideinlaß 10 und im rechteren unteren Eckbereich eine Fluidauslass 11 vorgesehen, sodass eine zwangsförmige mäanderförmige Durchströmung des Paneels 1 vorgegeben ist, wie sie mit den Pfeilen 12, 13 angedeutet ist. Durch die Einsickungen 6, 6' wird eine Umlenkung des Fluidstroms erreicht, sodass eine gleichmäßige Durchströmung des gesamten Paneels 1 erfolgt.

In Fig. 4 ist ein schematischer Schnitt in Richtung des Pfeils A in Fig. 3 dargestellt. Man erkennt, dass im Bereich der im Fluidführungskanal 2 vorgenommenen Rückprägung bzw. Einsickung 6 dort die durch den Fluidführungskanal 2 bewirkte Versteifung des Heizkörpers fehlt; um eine allfällige Schwächung des Paneels 1 an dieser Stelle auszugleichen, könnten in diesem Bereich Versteifungselemente an das Paneel 1 angeschweißt werden. Da die Einsickung 6 im Wesentlichen den selben Querschnitt wie die Sickung 3 aufweist, ist diese Einsickung 6 in Fig. 4 nicht zu erkennen.

Fig. 5 zeigt eine Ausführungsform eines erfindungsgemäßen Paneels mit einer Fluidzufuhr 10 und einer Fluidableitung 11. Bei der vorteilhaften Ausführungsform gemäß Fig. 6 befindet sich die Fluidzufuhr 10 im unteren Eckbereich. Der Fluidauslass 11 befindet sich im bauseits vorgegebenen Montageabstand oberhalb der Fluidzufuhr 10 und ist über eine Leitung 14 mit dem Fluidaustrittsanschluss 13 des Paneels 1 verbunden.

## Patentansprüche

1. Verfahren zur Herstellung eines Paneels (1) für Plattenheiz- oder -kühlkörper, wobei in zwei Blechbahnen in einem ersten Schritt zur Ausbildung von seitlichen Fluidführungskanälen (2, 2') und zu diesen quer bzw. senkrecht verlaufenden Querkanälen (4) Sickungen (3) eingeprägt werden, wobei danach die Blechbahnen zu Platten (20, 21) abgelängt werden und die gegenüberliegenden Platten (20, 21) längs ihres Umfanges und gegebenenfalls längs der einander gegenüberliegenden bzw. aneinander anliegenden Sickungen (3) verschweißt werden, **dadurch gekennzeichnet, dass** in einem weiteren Schritt diese Sickungen (3) jeweils an einem ihrer Enden, insbesondere in regelmäßigen Abständen über die Reihenfolge der ausgebildeten Sickungen (3), durch bis zum Rand (22, 23) der Platten (20, 21) hin verlaufende und die Fluidführungskanäle (2, 2') unterbrechende bzw. absperrende Rückprägungen (6, 6') verlängert werden, wobei diese Rückprägungen (6, 6') abwechselnd in den beiden Fluidführungskanälen (2, 2') ausgebildet werden, sodass ein mäanderförfmiger Durchfluss für das Fluid ausgebildet wird.

2. Verfahren nach Anspruch 1, **dadurch gekennzeichnet, dass** im Endbereich eines Paneels (1) die dort auszubildende Sickung (3) in ihren beiden Eckbereichen jeweils mit einer Rückprägung (6, 6') verlängert wird, daraufhin die beiden Blechbahnen (20, 21) in der Mitte der Sickung (3) und in der Mitte der beiden Rückprägung (6, 6') getrennt werden und folgend die Ausbildung des Paneelrandes (5), insbesondere in Form einer umlaufenden Schweißnaht (8), erfolgt.

3. Verfahren nach Anspruch 1 oder 2, **dadurch gekennzeichnet, dass** die Rückprägungen (6, 6') zur Verlängerung der Sickungen (3) mit Keilschiebern ausgebildet werden, die im Prägewerkzeug für die Sickungen (3) integriert bzw. auf diesem zwischen einer Arbeitsposition und einer Ruheposition verstellbar sind, und mit denen bei gleichzeitigem Einsatz eine Sickung (3) in beiden Endbereichen, jeweils mit einer Rückprägung (6, 6') zum Endabschluss des Paneels verlängert wird oder mit denen bei Verstellung nur eines Keilschiebers in die Arbeitsposition auf einer Seite bzw. in einem Enbereich einer Sickung (3) eine Rückprägung (6, 6') des jeweiligen Bereiches des Fluidführungskanales (2, 2') ausgebildet wird.

4. Verfahren nach einem der Ansprüche 1 bis 3, **dadurch gekennzeichnet, dass** die beiden Keilschieber unabhängig voneinander in die Arbeitsposition verstellbar sind.

5. Verfahren nach einem der Ansprüche 1 bis 4, **dadurch gekennzeichnet, dass** die Rückprägungen (6, 6') in abwechselnder Aufeinanderfolge und zu einander versetzt in den beiden Randbereichen (22, 23) eines Paneels gleichzeitig mit der Ausbildung der jeweiligen Sickung (3) vorgenommen werden.

## Claims

1. Process for making a panel (1) for plate radiators / coolers, wherein, in a first step, beads (3) are engraved into two webs of sheet metal for forming lateral fluid guiding channels (2, 2'), and transverse channels (4) extending transversely or perpendicularly thereto, after which said webs of sheet metal are cut into lengths to form plates (20, 21), and the opposite plates (20, 21) are welded along their periphery and, optionally, along the beads opposite to each other or engaging one another, **characterised in that** in a further step, these beads (3) are prolonged at a respective one of their ends, particularly at regular distances over the succession of the beads (3) formed, by back-impressions (6, 6'), which extend up to the edge (22, 23) of the plates (20, 21) and interrupt and lock the fluid guiding channels (2, 2'), said back-impressions (6, 6') being formed in alternation in the two fluid guiding channels (2, 2') so that a meander-shaped flow of the fluid is formed.

2. Process according to claim 1, **characterised in that** in an end region of a panel (1), the bead (3), to be formed there, is prolonged by a back-impression (6, 6') each in its two corner regions, after which the two webs of sheet metal (20, 21) are separated in the middle of the bead (3) and in the middle of the two back-impressions (6, 6'), and, in succession, the formation of the panel edge (5) is effected, particularly in the form of a peripheral welding seam (8).

3. Process according to claim 1 or 2, **characterised in that** the back-impressions (6, 6') for prolonging the beads (3) are formed with wedge sliders, which are integrated into the embossing die for the beads (3) or are displaceable on it between an operative position and a position of rest, and with which, with a simultaneous use, a bead (3) is prolonged in both end regions, by a back-impression (6, 6') each up to the end section of the panel, or with which, when displacing only one wedge slider into the operative position at one side or in an end region of a bead (3), a back-impression (6, 6') of the respective region of the fluid guiding channel (2, 2') is formed.

4. Process according to any of claims 1 to 3, **characterised in that** the two wedge sliders are displaceable into the operative position independently from one another.

5. Process according to any of claims 1 to 4, **characterised in that** the back-impressions (6, 6') are effected in alternating succession and offset to each other in the two edge regions (22, 23) of a panel simultaneously with the formation of a respective bead (3).

## Revendications

1. Procédé de fabrication d'un panneau (1) pour des radiateurs / refroidisseurs à plaques, dans lequel, dans une première étape, des moulures (3) sont imprimées dans deux bandes de tôle pour former des conduits latéraux de guidage de fluide (2, 2') et des conduits transversaux (4), qui s'étendent à travers et perpendiculairement à ceux-ci, après quoi les bandes de tôle sont mises au longueur à former des plaques (20, 21) et les plaques opposées sont soudées le long de sa circonférence et, le cas échéant, le long des moulures (3) opposées ou étant en contact l'une à l'autre, **caractérisé en ce, que** dans une autre étape, ces moulures (3) sont allongées à l'un respectif de ses bouts, particulièrement dans des écarts réguliers par la série des moulures (3) formées, par des estampages en retour (6, 6'), qui s'étendent jusqu'au bord (22, 23) des plaques (20, 21), et qui interrompent et verrouillent les conduits de guidage de fluide (2, 2'), ces estampages en retour (6, 6') étant formés en alternance dans les deux conduits de guidage de fluide (2, 2'), de manière qu'une circulation de fluide en forme de méandres est formée.

2. Procédé selon la revendication 1, **caractérisé en ce, que** dans la zone de bout d'un panneau (1) la moulure (3) à y former est allongée par un estampage en retour (6, 6') respectif dans ses deux zones de coin, après quoi les deux bandes de tôle (20, 21) sont séparées au milieu de la moulure (3) et au milieu des deux estampages en retour (6, 6'), et en suite on effectue la formation du bord de panneau (5), particulièrement en forme d'un cordon de soudure (8) périphérique.

3. Procédé selon la revendication 1 ou 2, **caractérisé en ce, que** les estampages en retour (6, 6') pour l'allongement des moulures (3) sont formés avec des coulisseaux de calage, qui sont intégrés dans l'outil d'estampage pour les moulures (3) ou sont déplaçable sur celui-ci entre une position de service et une position de repos, et avec lesquels, lors d'un emploi simultané, une moulure (3) est allongée par un estampage en retour (6, 6') respectif dans les deux zones de bout jusqu'à la bordure finale du panneau, ou avec lesquels, lors d'un déplacement d'un seul coulisseau de calage à sa position de travail à un côté ou dans une zone de bout d'une moulure (3), un estampage en retour (6, 6') de la zone respectif du conduit de guidage de fluide (2, 2') est formé.

4. Procédé selon une quelconque des revendications 1 à 3, **caractérisé en ce, que** les deux coulisseaux de calage peuvent être déplacés à la position de travail indépendamment l'un du l'autre.

5. Procédé selon une quelconque des revendications 1 à 4, **caractérisé en ce, que** les estampages en retour (6, 6') sont réalisés dans une succession alternante et décalé l'un à l'autre dans les deux zones de bord (22, 23) d'un panneau simultanément avec la formation de la moulure (3) respective.
